# EUROPEAN PATENT SPECIFICATION

(11) **EP 0 479 810 B1**
(45) Date of publication and mention of the grant of the patent: **27.09.1995**
(21) Application number: 90908951.8
(22) Date of filing: 07.06.1990
(51) Int. Cl.: C03B 37/04

(54) **SPINNING WHEEL UNIT FOR THE FIBRATION OF MINERAL MELT BY MEANS OF CENTRIFUGAL FORCES**
SPINNRAD ZUR HERSTELLUNG VON GLASFASERN MITTELS ZENTRIFUGALKRAFT
UNITE DE ROUE A FILER DE TRANSFORMATION EN FIBRES D'UNE COULEE MINERALE AU MOYEN DE FORCES CENTRIFUGES

(30) Priority: 07.06.1989 FI 892804; 07.06.1989 FI 892805
(43) Date of publication of application: 15.04.1992
(73) Proprietor: OY PARTEK AB, 21600 Parainen (FI)
(72) Inventor: ASTRAND, Erik, SF-26500 Parainen (FI)
(74) Representative: Smulders, Theodorus A.H.J., Ir.
(86) International application number: FI9000158
(87) International publication number: WO9015032

(56) References cited:
- EP-A- 0 054 617
- WO-A-88/06146

## Description

The invention relates to a spinning wheel unit in a spinning machine for the fiberization of mineral melt by means of centrifugal forces, comprising at least one spinning wheel shaft with associated spinning wheel, in which fibres are formed at the spinning wheel's outer periphery, inner periphery or in passing from the inner to the outer periphery, the spinning wheel shaft being driven by an electric motor.

Such a spinning wheel unit is known from WO-A-88/06146 in which the drive motor is fixedly mounted on the end face of the body shaft.

A spinning machine in which fibres are formed on the spinning wheel's outer periphery is called a cascade centrifuge. A cascade centrifuge normally contains 2-4 spinning wheels, each comprising a unit with drive shaft and devices for feeding air, coolant, binder and other additives. The group of spinning wheels and associated devices is usually placed on a truck, the whole contrivance being transported to the furnace. The truck may carry a fan, or be connected to an external fan, which blows air axially across the spinning wheel's fibre formation area. The air transports the formed fibres to a chamber where the wool fibres are gathered onto a conveyor.

Fiberization on the spinning wheel's inner periphery takes place according to much the same principle, with the difference that the mineral melt is piped into the spinning wheel where it is transported by the inner periphery and creeps over the spinning wheel's edge and brought out into an axially directed stream of air, which transports the fibre-flow thus formed to a wool-collecting chamber.

Fibres of glass are normally produced in a spinning wheel that fiberizes the melt as it passes from the inner to the outer periphery through minute holes. The spinning wheel shaft is vertical and the fibre-flow thus formed moves downward by means of gravity and axial blowing.

It has previously been determined (see for example US A 40 46 539) that a better control of the fibre flow, better fibre distribution on the collecting conveyor and better fibre orientation, may be obtained by blowing air or another gas into the zone in front of the spinning wheel. The pressure conditions in this zone are unstable because of the vacuum that occurs when the fibres are pulled from the spinning wheel periphery. Conditions can be stabilized by blowing in air, which may be done through a hollow spinning wheel shaft. This makes it easier to control the fibre flow than without blowing, resulting in a better wool quality.

It is also desirable to introduce a binder and any other additives to the area in front of the spinning wheel through a central nozzle in the end of the spinning shaft. This, if necessary in combination with external nozzles on the outside of the fibre flow, provides a more even distribution of additives to the fibres. An example of this is given in US A 29 44 284 according to which three concentric ducts were incorporated in the spinning shaft, the innermost for the supply of binder and the others for the transport to and from the spinning wheel of cooling water.

It is thus already known that both gases and various liquids can be supplied to the zone in front of the spinning wheel via a centre hole in the spinning shaft. The design of the spinning shaft has however been associated with difficulties that have limited the opportunities for using a centre hole on a large scale. The rotational speeds used in fibration are fairly high - up to 150 m/s at the spinning wheel's periphery is necessary for a good fibration. The motion must be even and well controlled for the structure to be able to stand up to such speeds. This makes great demands on the shaft's mechanical properties and especially on the mechanical properties of the shafts bearings. It has been necessary to accept a relatively thin shaft in order to avoid excessive peripheral speeds at the bearing points, and this has not allowed sufficient space for the larger cavities required to transport larger quantities of various media through the rotation shaft.

The aim of this invention is to improve the spinning unit's bearings so that the bearings can withstand higher peripheral speeds, thus allowing the use of a spinning shaft with a large centre opening for the introduction of various media to the zone in front of the spinning wheel.

This has been made possible by the invention because the spinning wheel unit is characterized in that the spinning wheel shaft is supported by magnetic bearings, the rotor of the electric drive motor forming an integral part with the spinning wheel shaft, so that the spinning shaft's contact-free bearings constitute bearings for the drive motor, the electric drive motor and the magnetic bearings forming part of a single structural unit.

As a result, peripheral speeds may be substantially increased up to 200 m/s for radial bearings and up to 400 m/s for axial bearings. The spinning wheel's diameter and rotational speed are no longer limited by the bearing, but by the mechanical strength of the spinning wheel itself. The spinning shaft is thus a shaft running through the whole spinning unit. This design is particularly advantageous from an aerodynamic point of view, and makes it easier to control the process of pulling the fibres off the spinning wheel and transporting them to the collecting chamber.

The most satisfactory bearings for the drive motor are one axial and two radial magnetic bearings, against the spinning shaft. The spinning wheel, which is permanently fixed to the spinning shaft directly or via an intermediate sleeve, has no bearing of its own against the spinning shaft and makes use of the drive motor bearings instead.

In the invention, the drive motor is an electric motor and in combination with the magnetic bearings forms part of a single structural or "electromagnetic" unit. This unit is arranged around the spinning shaft. The rotor of the electric motor can be placed inside the stator and be rigidly connected to the spinning shaft. Alternatively the rotor can be placed outside the stator and be permanently fixed to the spinning wheel and the spinning shaft. The motor drives the spinning wheel at a variable speed of between 0 and 20,000 rpm.

In one advantageous version, the diameter of the centre hole is at least 50 mm and at most 75% of the spinning wheel's diameter. The thickness of the wall of the spinning shaft is normally about 15 mm, but may be varied according to material and conditions of use. The spinning wheel's diameter is usually about 300 - 400 mm. The diameter of the hole should not exceed around 75% of the spinning wheel's diameter, in order to leave sufficient space for the spinning wheel and its cooling devices etc. A suitable diameter for the hole is between 100 and 150 mm, but the design has no upper limit for the hole diameter. The mechanical strength of the spinning wheel is the factor that limits the diameter of the spinning wheel, and thereby that of the spinning shaft.

The type of bearing used in the invention can of course be used in all types of spinning wheel shafts, including those without a centre hole. A through cavity in the shaft does however allow the blowing in of air or other gases, binder and other additives. The centre hole can also be used to advantage for the supply of solid particles such as clay or cement to the wool fibre flow. Even edge spill fibres and seconds can be added to the fibre flow and thus recycled.

It is an important advantage that the supply of all the above-mentioned materials takes place through the spinning unit's centre tube and that the materials are mixed with the fibre flow immediately after the fibres leave the spinning wheel, when adhesion is at its best. Thanks to the stabilization of pressure conditions in front of the spinning wheel, which results in better control of the fibre flow, the distribution of the materials or particles added to the fibre flow is very even.

In the invention the spinning shaft's inner wall can be cylindrical with no pronounced deviations from a smooth surface. The spinning shaft or its inner wall may however be provided with devices such as screws, fans etc. that control the flow of the various media. This allows more control over the supply of media.

A fan fitted to the spinning shaft's outer wall transports the air that pulls off the fibres between the outer casing of the unit and the "electromagnetic" unit. The air also cools the "electromagnetic" unit. A fan on the inner wall can be fitted to the rear section of the spinning shaft, between the inner wall and an insert for throttling the through hole. This fan can be used to transport air or another gas, possibly containing particles of a medium, to the zone in front of the spinning wheel. The fans may be fitted in driving contact with the outside or inside of the spinning shaft's wall. In addition to, or instead of, these fans, the spinning wheel unit can work with independent fans.

One or more tubes can be fitted inside the rotating drive shaft, placed inside or beside each other, for transporting the various media. One or two tubes may feed into a centre spreader from which discharge takes place through nozzles. The tubes can be relatively coarse for the application of large quantities of media under pressure. The tubes may be rotatable and/or axially moveable, if desired, in order to obtain a suitable distribution of the media. The tubes may be of equal or of differing lengths, and they may be arranged to reach out beyond the spinning wheel. The tubes or their inner walls may also be provided with devices such as screws, fans etc.

It is thus already known that binders may be supplied through a centre nozzle at the end of the spinning shaft. However in cascade spinning this method of applying binders has been associated with the disadvantage that the binder is spread around in all directions by the rotating centre nozzle, while the fibres are mainly blown off from certain sectors of the spinning wheel's periphery. This results in an uneven distribution of the binder and substantial wastage of binder. In the invention the centre nozzle is preferably stationary and the binder supply may be sectorized by means of suitably arranged nozzles. The supply of binder is more even, resulting in a better wool quality and reduced wastage of the binder.

If the centre hole is used only for blowing in air or other gases, the supply of binder and cooling water is arranged through ducts in the motor housing and through channels to the centre nozzle and spinning wheel.

The following section describes an advantageous version of the invention with reference to the enclosed drawings in which
figure 1 shows the front part of two interacting spinning wheel units, in perspective,
figure 2 shows a longitudinal section through a spinning wheel unit in a cascade centrifuge with magnetic bearings, and
figure 3 is a skeleton drawing of the magnetic bearing control circuit in the form of a cross section through the line II - II in fig. 2.

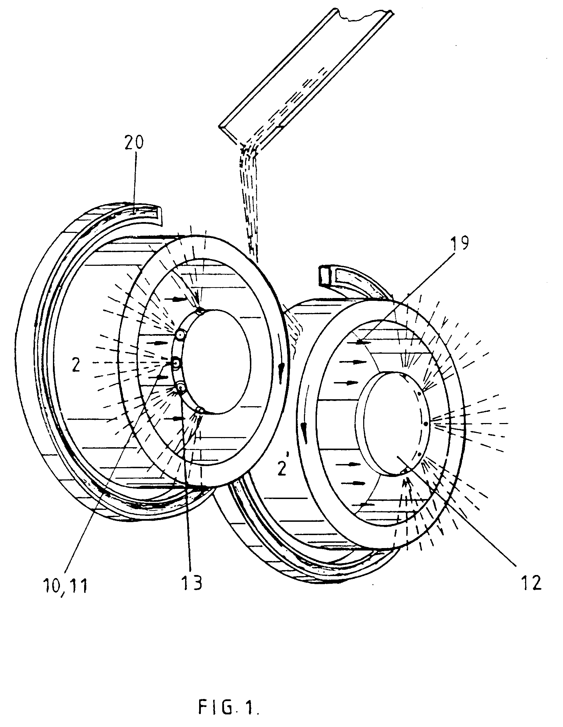

Figure 1 shows an arrangement of two interacting spinning wheel units (2, 2') in a cascade centrifuge. The spinning wheel has tubes (10 and 11) incorporated in the centre hole. The tubes finish at the end of the shaft with a centre spreader (12), the nozzles (13) of which are arranged to provide a sectorized distribution of the additive. Between the tubes and the shaft wall, arrows (19) show air or another gas being blown through the centre hole to the zone in front of the spinning wheel, inside the flow of fibres formed. The air that pulls off the fibres is blown outside the flow of fibre through outer air-nozzles (20).

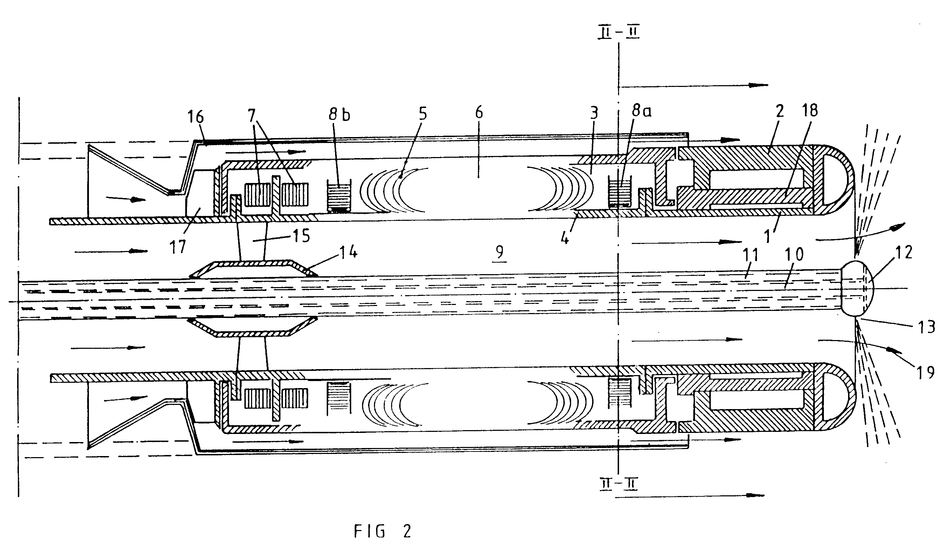

Figure 2 is a sketch showing the construction of the spinning wheel unit as per the invention. Number 1 shows the spinning shaft, 2 the spinning wheel, 3 the single structural unit comprising electric motor and magnetic bearings, 4 the rotor and 5 the stator. Thus the motor is placed on the outside of the spinning shaft and rotor 4 forms a permanent part of shaft 1. The spinning wheel fits onto the spinning shaft by means of an intermediate sleeve 18. The electric motor, number 6, is supported on the spinning shaft by means of magnetic bearings 7, 8a and 8b. Bearing 7 is an axial bearing and bearings 8a and 8b are radial bearings placed in front of and behind the motor respectively. The spinning wheel (2) is permanently attached to the front end of the spinning shaft which in turn is rigidly attached to the rotor (4).

The spinning shaft's through cavity (9) has a diameter of between 100 and 150 mm. The peripheral speed of the spinning shaft is high because of its large diameter, which is possible thanks to the magnetic bearings.

In the version shown, two tubes (10 and 11) are incorporated inside each other in the centre hole (9). The tubes are stationary and linked to the centre nozzle (12). They are intended for the supply of binder and other additives. In the nozzle there are holes (13) arranged at the periphery. The holes are distributed along the periphery in such a way as to achieve a sectorized application of binder. This is made possible thanks to the immobility of the centre nozzle. In this way the binder can be directed towards the sectors where the fibre is blown off, and binder wastage can be minimized.

There is a throttle (14) around the tube (11), approximately in line with the rear end of the motor. A fan (15) is fitted between the throttle and the spinning shaft's inner wall for the introduction of air or another gas to the zone of unstable pressure immediately in front of the spinning wheel. This extra flow of air allows better control of the fibre flow in front of the spinning wheel. Another fan (17) is fitted between the spinning shaft's outer wall and the spinning wheel's outer casing (16) to blow in the gas used for pulling off the fibres. Both fans are driven by the motor (4) of the spinning wheel unit. The fans (15 and 17) also contribute to cooling of the "electromagnetic" unit (3).

The version in figure 2 shows a spinning wheel unit with an internal rotor. The same arrangement is also possible with an external rotor design although the construction differs.

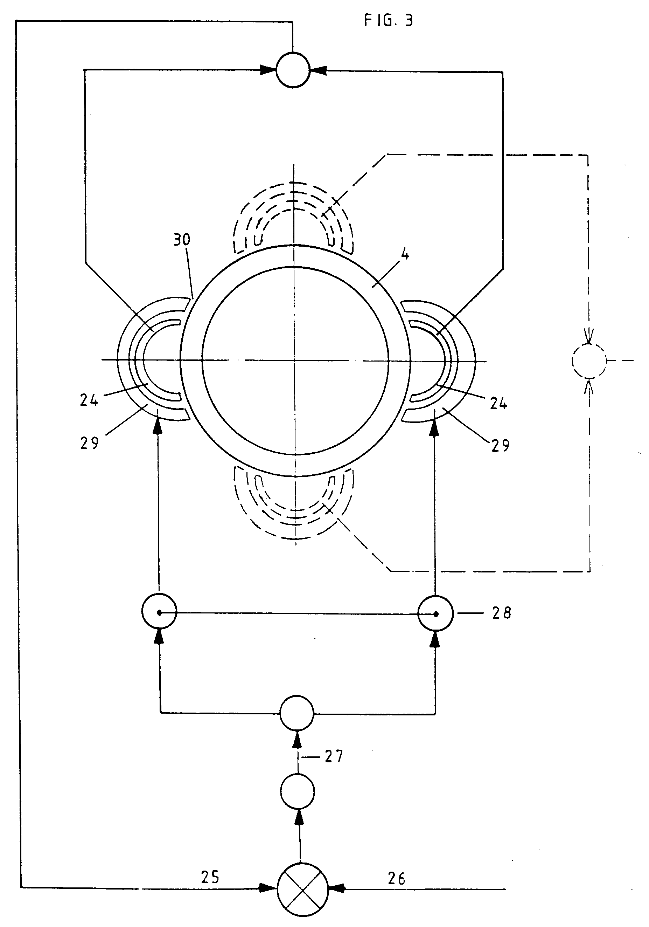

Figure 3 is a diagram of the control circuit for the magnetic bearings of the spinning shaft (1) in a cross section through the line II - II in figure 2. The position of the ferrite rotor (4) is detected by means of position detectors (24), which send a position signal (25) to the control circuit. In the control circuit the position signal is compared to a reference signal (26) which states where the rotor should be. The difference signal (27), between the position and reference signals, affects power distribution (28) between the electromagnets (29) which in the figure constitute the forward radial bearing. This continuous process maintains the air gap (30) within predetermined limits.

In the version shown in figures 2 and 3, the magnetic bearings are on the outside of the rotor. The magnetic bearings may alternatively be positioned inside the rotor. Two magnet pairs are shown here but there may be several grouped around the rotor.

The figures show only one advantageous way of supporting a spinning shaft on magnetic bearings. The invention may however be realized in several different ways.

## Claims

1. A spinning wheel unit in a spinning machine for the fiberization of mineral melt by means of centrifugal forces, comprising at least one spinning wheel shaft (1) with associated spinning wheel (2), in which fibres are formed at the spinning wheel's (2) outer periphery, inner periphery or in passing from the inner to the outer periphery, the spinning wheel shaft (1) being driven by an electric motor (6), characterized in that the spinning wheel shaft (1) is supported by magnetic bearings (8a, 8b), the rotor (4) of the electric drive motor (6) forming an integral part with the spinning wheel shaft (1), so that the spinning shaft's (1) contact-free bearings (7, 8, 8a) constitute bearings for the drive motor (6), the electric drive motor (6) and the magnetic bearings (7, 8, 8a) forming part of a single structural unit.

2. A spinning wheel unit according to claim 1, **characterized** by the spinning shaft (1) being provided with devices (10,11; 15, 17) for the control of the supply of various media to the area in front of the spinning shaft through a cavity (9) in the shaft and/or along the outside of spinning shaft.

3. A spinning wheel unit according to claim 2, **characterized** by the devices including one or more fans (15,17) arranged so as to be driven by the rotating spinning shaft (1) in contact with its inside or outside.

4. A spinning wheel unit according to claim 2 or 3, **characterized** by the presence within the spinning shaft (1) of one or more tubes (10,11) inside or beside each other, for the transport of binder and/or any other additive in liquid, gas and/or particle form.

5. A spinning wheel unit according to claim 4, **characterized** by the tube end at the mouth of the centre hole (9) being provided with a mouthpiece (12) whose nozzle holes are so arranged as to provide a sectorized output of additive.

6. A spinning wheel unit according to claim 4 or 5, **characterized** by one or more of the tubes (10,11) being able to rotate or move in an axial direction.

7. A spinning wheel unit according to one of patent claims 4-6, **characterized** by the cross section of the tubes deviating from the circular.

## Patentansprüche

1. Schleuderradeinheit in einer Faserherstellungsmaschine zur Faserherstellung aus einer Mineralschmelze mit Hilfe von Zentrifugalkraft, bestehend aus mindestens einer Schleuderradachse (1) mit einem dazugehörigen Schleuderrad (2), in dem Fasern am äußeren oder am inneren Umfang des Schleuderrads (2) oder durch Wanderung der Fasern vom inneren Umfang zum äußeren Umfang gebildet werden, wobei die Schleuderradachse (1) von einem elektrischen Motor (6) angetrieben wird, dadurch gekennzeichnet, daß die Schleuderradachse (1) von Magnetlagern (8a, 8b) getragen ist, der Rotor (4) des elektrischen Antriebsmotors (6) einen integrierten Bestandteil mit der Schleuderradachse (1) bildet, wobei die kontaktfreien Lager (7, 8, 8a) der Schleuderradachse (1) als Lager für den Antriebsmotor (6) dienen und der elektrische Antriebsmotor (6) und die Magnetlagern (7, 8, 8a) Teile einer Einzelbaueinheit bilden.

2. Schleuderradeinheit gemäß Anspruch 1, dadurch gekennzeichnet, daß die Schleuderradachse (1) mit Vorrichtungen (10,11;15,17) zur Steuerung der Zufuhr von verschiedenen Mitteln zu dem vorderen Bereich der Schleuderradachse durch eine Aushöhlung (9) in der Achse und/oder entlang der Außenseite der Schleuderradachse versehen ist.

3. Schleuderradeinheit gemäß Anspruch 2, dadurch gekennzeichnet, daß die Vorrichtungen aus einem oder mehreren Bläsern (15,17) bestehen, die so angeordnet sind, daß sie von der Innenseite oder von der Außenseite der rotierenden Schleuderradachse (1) angetrieben werden.

4. Schleuderradeinheit gemäß Anspruch 2 oder 3, dadurch gekennzeichnet, daß in der Schleuderradachse (1) eins oder mehrere, ineinandergesteckte oder nebeneinander angeordnete Rohre (10,11) zur Beförderung eines Bindemittels und/oder eines anderen Zusatzmittels in flüssiger, gasförmiger und/oder fester Form vorgesehen sind.

5. Schleuderradeinheit gemäß Anspruch 4, dadurch gekennzeichnet, daß das Rohrende an der Mündung der Mittelhöhlung (9) mit einem Mündstück (12) versehen ist, dessen Düsen so angeordnet sind, daß sie einen zonenweisen Austritt von Zusatzmitteln ermöglichen.

6. Schleuderradeinheit gemäß Anspruch 4 oder 5, dadurch gekennzeichnet, daß eins oder mehrere der Rohre (10,11) rotierend oder in Richtung der Achse beweglich angeordnet sind.

7. Schleuderradeinheit gemäß einem der Ansprüche 4 bis 6, dadurch gekennzeichnet, daß der Querschnitt der Rohre von der kreisrunden Form abweicht.

## Revendications

1. Unité à rouet dans une machine à filer pour le dépastillage d'une fusion minérale par des forces centrifuges, comprenant au moins un axe de rouet (1) avec un rouet (2) correspondant, dans laquelle des fibres sont formées à hauteur de la périphérie externe ou de la périphérie interne du rouet (2) ou en passant de la périphérie interne vers la périphérie externe, l'axe du rouet (1) étant entraîné par un moteur électrique (6), caractérisée en ce que l'axe de rouet (1) est soutenu par des paliers magnétiques (8a, 8b), le rotor (4) du moteur d'entraînement électrique (6) faisant partie intégrante de l'axe du rouet (1) de sorte que les paliers (7, 8, 8a) sans contact de l'axe du rouet (1) constituent des paliers pour le moteur d'entraînement (6), le moteur d'entraînement électrique (6) et les paliers magnétiques (7, 8, 8a) faisant partie d'une seule unité structurelle.

2. Unité à rouet selon la revendication 1, caractérisée par l'axe de rouet (1) muni de dispositifs (10,11; 15,17) pour la commande de l'alimentation de divers milieux vers la région à l'avant de l'axe de rouet par une cavité (9) dans l'axe et/ou le long de l'extérieur de l'axe de rouet.

3. Unité à rouet selon la revendication 2, caractérisée par le fait que les dispositifs comprennent un ou plusieurs ventilateurs (15, 17) disposés de manière à être entraînés par l'axe de rouet rotatif (1) en contact avec son intérieur ou son extérieur.

4. Unité à rouet selon la revendication 2 ou 3, caractérisée par la présence dans l'axe de rouet (1) d'un ou plusieurs tubes (10, 11) à l'intérieur ou au-dessus l'un de l'autre, pour le transport du liant et/ou de tout autre additif sous forme liquide, gazeuse ou en particules.

5. Unité à rouet selon la revendication 4, caractérisée enc e que l'extrémité du tube à l'embouchure de l'orifice central (9) est munie d'un embout (12) dont les orifices de tuyères sont disposés de manière à fournir une sortie d'additif de type iris.

6. Unité à rouet selon la revendication 4 ou 5, caractérisée en ce qu'un ou plusieurs des tubes (10, 11) sont capables de tourner ou de se déplacer dans une direction axiale.

7. Rouet selon l'une des revendications 4 à 6, caractérisé par le fait que la coupe transversale des tubes s'écarte de la direction circulaire.
